# EUROPÄISCHE PATENTSCHRIFT

(11) **EP 3 253 998 B1**
(45) Veröffentlichungstag und Bekanntmachung des Hinweises auf die Patenterteilung: **25.09.2019**
(21) Anmeldenummer: 16702696.2
(22) Anmeldetag: 01.02.2016
(51) Int. Cl.: F16H 55/06, F16H 55/14, B22F 3/11, B22F 5/08, B22F 7/00, B22F 7/08

(54) **VERFAHREN ZUR HERSTELLUNG EINES LEISEN ZAHNRADES**
METHOD FOR PRODUCING A QUIET GEAR WHEEL
PROCÉDÉ DE FABRICATION D'UNE ROUE DENTÉE SILENCIEUSE

(30) Priorität: 03.02.2015 DE 102015201873
(43) Veröffentlichungstag der Anmeldung: 13.12.2017
(73) Patentinhaber: GKN Sinter Metals Engineering GmbH, 42477 Radevormwald (DE)
(72) Erfinder: LEUPOLD, Björn, 45770 Marl (DE); HÖGES, Simon, 51491 Overath (DE); SCHNEIDER, Markus, 42853 Remscheid (DE); SCHUPP, Thomas, 57584 Scheuerfeld (DE); JANZEN, Vitali, 51427 Bergisch Gladbach (DE); KOTTHOFF, Gerd, 42499 Hückeswagen (DE); ERNST, Eberhard, 36124 Eichenzell (DE)
(74) Vertreter: Rössler, Matthias
(86) Internationale Anmeldenummer: PCT/EP2016/052018
(87) Internationale Veröffentlichungsnummer: WO 2016/124514

(56) Entgegenhaltungen:
- DE-A1-102005 027 137
- DE-A1-102013 106 686
- DE-C1- 4 211 318
- DE-U1- 7 625 489
- JP-A- S6 343 062
- JP-A- H04 327 056
- JP-A- 2004 036 745
- SU-A1- 1 325 232
- US-A- 6 148 685

## Beschreibung

Die vorliegende Erfindung betrifft ein Verfahren zur Herstellung eines Zahnrads, welches zumindest ein gesintertes Material mit einer Porosität aufweist, wobei das Zahnrad neben der Porosität ein weiteres Schallminderungsmittel aufweist.

Im Zuge der zunehmenden Elektrifizierung im Antriebsstrang von Fahrzeugen ist das Geräuschverhalten vom Getriebe von steigender Bedeutung, wenn das Gesamtgeräuschverhalten eines Fahrzeugs zu untersuchen ist. In der Literatur werden die Geräuschreduktionsmaßnahmen in primäre und sekundäre, also aktive und passive Maßnahmen unterschieden. Bei den aktiven Maßnahmen wird direkt der Anregungsmechanismus verändert, also zum Beispiel die Mikrogeometrie der Verzahnung. Auf der anderen Seite wird bei den passiven Maßnahmen die Schallweiterleitung dahingehend verändert, dass der Körperschall sich vermindert ausbreiten kann.

Möglichkeiten von passiven Maßnahmen werden zum Beispiel in einer Dissertation von Dietmar Mandt mit dem Titel "Eigenschaften und Einsatzverhalten von leichten und dämpfenden Werkstoffverbund-Zahnrädern" ISBN 978-3-8322-5209-0, WZL, RWTH Aachen, Berichte aus der Produktionstechnik Band 14/2006, oder in der Patentschrift DE 955 467 aus dem Jahr 1957 ausführlich beschrieben. Hierbei handelt es sich häufig um sogenannte Werkstoffverbundzahnräder, die aus mehreren, gefügten Einzelbauteilen mit unterschiedlichen Materialien bestehen. Diese bekannten Verfahren haben den Nachteil, dass die nötige Kraftübertragung nur bedingt realisierbar ist. Des Weiteren müssen die Halbzeuge teilweise mit hohem Aufwand hergestellt und anschließend gefügt werden. Die Kraftübertragung kann zwar dadurch verbessert werden, dass die Einzelbauteile formschlussoptimiert gestaltet werden, allerdings vergrößert sich dadurch der Herstellaufwand. Des Weiteren ist aus der DE 198 15 860 A1 bekannt, dass eine Variation der Dichte im Radkörper bei einem Hohlrad sich positiv auf das Geräuschverhalten auswirkt. Aus der EP 1 552 895 B1 geht wiederum ein gesintertes Zahnrad hervor, bei dem zum Zwecke der Geräuschminderung unterschiedlichen Dichten entlang eines Zahnrad-Radius angeordnet sind.

Zahnräder bzw. deren Herstellungsverfahren sind z. B. aus der DE 42 11 318 C1, US 6,148,685 A, JP S63-43062 A, JP H04 327056 A, JP 2004-036745 A, DE 10 2005 027 137 A1, SU 1 325 232 A1, DE 76 25 489 U1, DE 10 2013 106 686 A1 bekannt. Die gattungsgemäße DE 10 2005 027 A1 offenbart ein Verfahren zur Herstellung einer Verzahnung aus verdichtetem Sintermaterial, wobei eine vorverdichtete Zahnvorform zumindest in einem Bereich mittels iterativ ermittelter Daten zumindest um 0,05 mm an ihrer Oberfläche auf ihre Endform verdichtet wird und eine Güte der Endform zumindest in einem Bereich von mindestens f_{Hα} =4, F_{α} =7 und F _{fα} =7 erzielt wird.

Aufgabe der vorliegenden Erfindung ist es, einen Radkörper eines Zahnrades zu verändern, um den Geräuschpegel im Betrieb des Zahnrads, insbesondere in einem Getriebe, zu reduzieren.

Diese Aufgabe wird mit einem Verfahren mit den Merkmalen des Anspruchs 1 gelöst. Vorteilhafte Weiterbildungen gehen aus den nachfolgenden Unteransprüchen, aus der Beschreibung wie auch aus den Figuren hervor.

Es wird ein Zahnrad vorgeschlagen, welches zumindest ein gesintertes Material mit einer Porosität aufweist, wobei das Zahnrad neben der Porosität ein weiteres Schallminderungsmittel aufweist.

Es hat sich herausgestellt, dass durch eine Variation der Dichte im Radkörper des Zahnrads der Übertragungspfad der Körperschallwellen von der Erzeugung am Zahnkranz zur Nabe unterbrochen bzw. die Schallwellen so gebrochen oder reflektiert werden können, dass das Körperschallsignal am Ausgang, nämlich der Welle/Bohrung des Zahnrads, deutlich geringer ausfällt.

Die Variationen der Dichte können dabei rotationssymmetrisch oder lokal ausgeführt werden.

Ebenso möglich ist ein Zahnrad in Scheibenanordnung mit unterschiedlich ausgeführten Dichten. Der Winkel der Ebene der einzelnen Schichten kann dabei von der Vorzugsebene, der horizontalen Ebene des Bauteils, abweichen.

Da sich der Körperschall in Materialien mit höherer Dichte besser ausbreitet als in Materialien mit geringerer Dichte, ist es auch möglich, Schallführungskanäle in den Radkörper oder die Verzahnung einzubringen, die die Körperschallwellen gezielt umlenken oder abschwächen. Dabei können die Kanäle und/oder lokalen Dichtevariationen sowohl mit reinem Material unterschiedlicher Dichte ausgefüllt werden als auch mit Kombinationen aus verschiedenen Materialien wie Eisenpulver oder auch Öl.

Diese schallmindernden Geometrien können mit unterschiedlichen Herstellverfahren realisiert werden. Hierzu gehören zum Beispiel ein intelligenter Füllschuh, insbesondere ein rotatorisch sich drehender Füllschuh zur Befüllung mit zumindest zwei unterschiedlichen Materialien, so wie es zum Beispiel aus der DE 10 2014 006 374 hervorgeht. Dadurch können zum Beispiel Dichtevariationen bereits beim Pressvorgang hergestellt werden, das auch als Grün in Grün bezeichnete Herstellungsverfahren, wie es aus der DE 10 2009 042 598 hervorgeht, das konventionelle Pressen wie es auch in abgewandelter Form aus der WO 2013/067995 A1 hervorgeht, sowie eine additive Fertigung, zum Beispiel mit einer Vorrichtung, wie sie aus der DE 10 2013 103006 A1 beispielhaft hervorgeht. Es können aber auch Herstellungsverfahren eingesetzt werden, wie sie grundsätzlich aus der EP 2 221 131 A1, der EP 1 407 877 A1 oder auch der JP S60-162 702 A hervorgehen.

Eine zweite Möglichkeit, den Übertragungspfad geräuschmindernd zu optimieren, besteht darin, den Radkörper topologieoptimiert zu gestalten; zum Beispiel eine Stegform zu nutzen. Einzelne Streben können mit einer dämpfenden Beschichtung versehen sein, die das Schwingungsverhalten der Streben verbessern. Hierfür kann ebenfalls eine additive Fertigung genutzt werden, um topologieoptimierte Strukturen zu realisieren.

Als dritte Möglichkeit kann man das Einbringen mehrerer geschlossener "Feder-Masse-Zellen" in den Radkörper sehen. Dabei arbeitet eine "Feder-Masse-Zelle" als ein Tilger für ein bestimmtes Frequenzband. Die "Zelle" kann mit verschiedenen Medien ausgefüllt sein. Durch gezielte Auslegung der "Feder-Masse-Systeme" kann so eine Art "Stopband-Filter" in den Radkörper eingebaut werden. Zur Realisierung solcher Strukturen kann zum Beispiel eine additive Fertigung genutzt werden.

Bevorzugt wird am Zahnrad vorgesehen, dass eine schalltechnische Entkopplung von einem Zahnkranz des Zahnrads und einer Nabe einhergehend mit einer Brechung der Schallwellen durch eine Variation der Dichte im Radkörper erzeugt ist, die einen Übertragungspfad der Körperschallwellen von der Erzeugung am Zahnkranz zur Nabe unterbricht und/oder Schallwellen so bricht oder reflektiert, dass ein Körperschallsignal an einem Ausgang in Form einer Welle des Zahnrads oder einer Bohrung des Zahnrads geringer ausfällt.

Des Weiteren besteht die Möglichkeit, dass eine radiale Variation einer Dichte in einem Radkörper des Zahnrads vorliegt.

Weiterhin besteht die Möglichkeit, dass durch Kammern, die in einem Radkörper des Zahnrads eingebracht sind, ein Körperschall gebrochen, absorbiert und/oder reflektiert wird. Beispielsweise ist vorgesehen, dass die Kammern leer und/oder mit einem Medium gefüllt sind, vorzugsweise einem Öl und/oder einem losen Pulver.

Auch können in dem zu sinternden Pulver Hohlkugeln angeordnet werden, wie sie zum Beispiel aus metallischem Material herstellbar sind und mitversintert werden können. Beispielsweise kann dazu ein Verfahren genutzt werden, wie es aus Waag, U; Schneider,L; Lötmann,P Stephani, G; "Metallic hollow sphere material for the future", Metal Powder, oder aus Stephani, G; Waag, U; "Superleichte metallische Hohlkugelstrukturen", Tagungsband BMBF-WING Konferenz 2003, S. 172-181 hervorgeht.

Eine weitere Ausgestaltung sieht vor, dass zur Schallminderung das Zahnrad zur Brechung, Absorbtion und/oder Reflexion von Schallwellen gefüllte / nicht gefüllte Kammern aufweist. So kann zum Beispiel durch eine Kombination von unterschiedlichen Dichten und/oder Materialien zum Beispiel in radialer Richtung in Form von Scheiben das Gesamtsystem schwingungsärmer gestaltet werden, ohne dabei Einbußen bei der Tragfähigkeit zu haben. Ein Winkel der Ebene der einzelnen Schichten kann dabei von einer Vorzugsebene des Zahnrads, die insbesondere horizontal angeordnet ist, abweichen.

Eine weitere Ausgestaltung sieht vor, dass eine axiale Dichtevariation vorgesehen ist. Dazu können sich Mäander durch das Zahnrad in axialer Richtung erstrecken. Auch andere Formen sind möglich.

Eine bevorzugte Ausgestaltung sieht vor, dass das Zahnrad einen scheibenförmigen Aufbau unterschiedlicher Dichten hat. So können Scheiben hoher Dichten eine Scheibe geringer Dichte einrahmen. Auch umgekehrt besteht die Möglichkeit, dass Scheiben niedriger Dichte Scheiben hoher Dichte einrahmen. Die Scheiben können zusammen verpresst werden oder auch jeweils einzeln vorverpresst sein.

Eine Weiterbildung sieht vor, dass im Zahnrad ein Schallkanal als Schallleitung im Zahnrad verläuft, entlang der ein Körperschall geführt wird. Hierzu können zum Beispiel ein oder mehrere, gezielt eingebrachte Führungskanäle als Schallleitungen einen Körperschall daran hindern, direkt zu einem Ausgang in Form einer Welle oder Bohrung des Zahnrads zu gelangen. Es besteht zum Beispiel die Möglichkeit, dass ein Material mit einer höheren Dichte einen Schallkanal bildet und damit eine Schallleitung innerhalb des Zahnrads ermöglicht. Eine Ausgestaltung sieht zum Beispiel vor, dass ein Schallkanal mit einem, zur Umgebung des Schallkanals gleichen Materials mit geringerer Porosität gefüllt ist. Auch ist es bevorzugt, wenn eine Schallleitung rotationssymmetrisch ausgeführt ist, insbesondere um eine Drehachse des Zahnrads herum. Die Schallleitung kann unterbrochen wie auch durchgängig sein.

Eine weitere Ausgestaltung sieht vor, dass das Zahnrad eine schwingungsdämpfende Beschichtung aufweist. Weiterhin ist beispielsweise vorgesehen, dass das Zahnrad eine Verstrebung aufweist, wobei Streben der Verstrebung bevorzugt schwingungsdämpfend beschichtet sind.

Eine weitere Ausgestaltung sieht vor, dass ein oder mehrere asymmetrische Geometrien im Zahnrad vorliegen, die eine Eigenfrequenz des Zahnrads beeinflussen. Neben der Beeinflussung der Steifigkeit des Zahnrads kann auch die Massenträgheit beeinflusst werden. Dadurch kann zum Beispiel vermieden werden, dass ein Durchfahren eines Drehzahlbereichs zu einem Durchfahren einer Eigenfrequenz und Erzeugung von Resonanzeffekten führt.

Bevorzugt wird bei der Geräuschminderung aber nicht nur die Verminderung des Körperschalls im und am Zahnrad betrachtet. Vielmehr geht dieses einher mit der Frage der Erzeugung von Körperschall durch fertigungsbedingte Gegebenheiten. Es hat sich herausgestellt, dass ein Zusammenwirken im Bereich der fertigungstechnischen Parameter mit schallmindernden Mitteln zusammen am besten geeignet sind, geräuschgedämmte Zahnräder insbesondere für Getriebe zur Verfügung zu stellen. Daher wird auch ein Zahnrad, wie oben bevorzugt vorgeschlagen, bei dem das Zahnrad eine Qualitätsgüte des ausgelegten Zahnrads gemäß DIN 3961 und DIN 3962 bezüglich zumindest eines Parameters, vorzugsweise eines totalen Profilfehlers Fₐ, eines Profilwinkelfehlers f_{Ha} und eines Profilformfehlers fₐ, von zumindest der Güte 5 oder besser aufweist. Dieses gilt insbesondere für Stirnradzahnräder. Für Kegelräder wird für die Güte die ISO 17485 herangezogen.

Erfindungsgemäß wird ein Verfahren zur Herstellung eines Zahnrads, welches zumindest ein gesintertes Material mit einer Porosität aufweist, wobei das Zahnrad neben der Porosität ein weiteres Schallminderungsmittel aufweist, aufweisend die folgenden Schritte vorgeschlagen:
- Auslegung eines gesinterten Zahnrads anhand vorgebbarer Geometrie- und Lastdaten,
- Simulation einer Lastberechnung und einer Geräuschvorhersage des ausgelegten Zahnrads,
- Auswahl von zumindest einem Schallminderungsmittel wie oben bzw. nachfolgend beschrieben,
- Überprüfung einer Lastberechnung und einer Geräuschvorhersage,
- gegebenenfalls Anpassung des Zahnrads und Wiederholung von zumindest einer Überprüfung der Geräuschvorhersage bzw. der Lastberechnung,
- Erstellen von Fertigungsdaten und Fertigung des Zahnrads auf Basis der Fertigungsdaten.

Das Verfahren sieht bevorzugt vor, dass mehrere verschiedene Schallminderungsmittel simuliert werden, bis eine Auswahl von ein oder mehreren Schallminderungsmitteln anhand vorgebbarer Kriterien erfolgt.

Die Auslegung des Zahnrads zum Beispiel als Erstauslegung für einen Startpunkt kann beispielsweise über eine vorhandene Datenbank erfolgen, in der eine Vielzahl an Daten, Geometrieformen etc. abgespeichert sind. Durch Eingabe von ein oder mehreren Vorgaben kann dann mit einer ersten Geometrie gestartet werden. Eine Simulation einer Lastberechnung kann beispielweise mit herkömmlichen Programmen erfolgen, die zum Großteil auf Finiten-Elementen-Methoden aufsetzen. Eine Geräuschvorhersage wiederum kann durch verschiedene Modelle ermöglicht werden, die eingesetzt werden können. Beispielhaft sei auf eine Modell-Darstellung verwiesen, wie sie aus "Simulation und Optimierung des Geräuschverhaltens von Fahrzeuggetrieben", Dipl.-Ing. Peter Fietkau, Dipl.-Ing. Axel Baumann, Dipl.-Ing. Sabine Sanzenbacher, Prof. Dr.-Ing. Bernd Bertsche, ATZ - Automobiltechnische Zeitschrift, Ausgabe 09/2013, Seite 730-735 hervorgeht. Eine weitere sehr ausführliche Modellierung geht aus der Dissertation von Michael Karl Heider an der Technischen Universität München mit dem Titel "Schwingungsverhalten von Zahnradgetrieben - Beurteilung und Optimierung des Schwingungsverhaltens von Stirnrad -und Planetengetrieben", ISBN 978-3-8439-0767-5 hervor.

In die Modelle können auch unterschiedliche Materialmodelle Eingang finden, vor allem elastische, visko-elastische, poro-elastische Modelle wie auch Modelle für Verbundwerkstoffe. Damit sind zum Beispiel auch in einer Bewertung und Simulation Materialien mit atypischen Eigenschaften einsetzbar, wie beispielsweise einem hohen Dämpfungsverhalten und akustischer Absorptionsfähigkeit.

Bevorzugt ist gemäß einer Weiterbildung vorgesehen, dass eine Kopplung mit einer Außenraumakustik erfolgt: Die Kopplung von Strukturen und Schwingungen wird eingesetzt, um in einer einzigen gekoppelten vibroakustischen Analyse das Schallfeld zu analysieren, das von einer schwingenden Struktur des Zahnrads abgestrahlt wird.

Auch kann im Rahmen der Simulation eine auf einer Frequenzgangfunktion (Frequency Response Function, abgekürzt FRF) beruhende Methode genutzt werden. Diese ermöglicht, einen Pfad eines Energieflusses von einer Quelle zu einem relevanten Punkt bestimmen zu können, um so kritische Wege und Geräuschquellen frühzeitig zu identifizieren. Beispielsweise wird ein Frequenzgang des Zahnrads aufgrund von Einheitsbelastungen bei einer bestimmten Frequenz dargestellt. Anschließend können verschiedene Frequenzgänge kombiniert werden, um so die FRFs von Getrieben mit diesem Zahnrad zu erzeugen.

Das Verfahren erlaubt, ein oder mehrere verschiedene Schallminderungsmittel an ein oder verschiedenen Positionen vorzusehen und die Auswirkungen sodann auf das Körperschallverhalten des Zahnrads zu prüfen. Dazu können verschiedene lokale Anordnungen wie aber auch unterschiedliche Abmessungen, Dichten, Porositäten, Geometrien oder sonstiges simuliert werden. Die Simulation mit dem oder den Schallminderungsmitteln ermöglicht den Einfluss auf die Lastberechnung und das Geräuschverhalten einzuschätzen. Durch Vorgabe von verschiedenen Parametern ist es möglich, zu bewerten, ob die so aufgefundenen Werte den Vorgaben genügen oder ob eine Anpassung erfolgen muss. Mittels iterativer Vorgehensweise kann dieser Prozess automatisiert ablaufen. Schließlich können aus dem so ermittelten Ergebnis Fertigungsdaten, zum Beispiel CAD-Daten gewonnen, werden, die gemäß einer Weiterbildung direkt einer Fertigung zugeführt werden können.

Des Weiteren ist es bevorzugt, dass eine Qualitätsgüte des ausgelegten Zahnrads gemäß DIN 3961 und DIN 3962 bezüglich eines Parameters, vorzugsweise eines totalen Profilfehlers Fₐ, eines Profilwinkelfehlers f_{Ha} und eines Profilformfehlers fₐ, auf jeweils die Güte 6 oder besser angepasst wird. Ein Ansatz für Verzahnungsqualitäten ist beispielsweise wie folgt:
1) Sinter hartfeinbearbeitet => Qualität vergleichbar mit Vollstahlradfertigung heute, z. B. Q6/Q5 incl. Balligkeiten (Profil- und Flanke) im Bereich von 4-15 µm
2) Fertiggewalzt => Profil/Flanke/Teilung => Q5 nach Walzen, Q6-7 nach Härten (= Endzustand) oder besser
3) Durch einen intelligenten Radkörper kann eine Aufweitung der Toleranzen (Qualitäten) in einzelnen Merkmalen möglich sein, z. B. Q5-Q6 in Profil und Teilung und eine schlechtere Qualität in der Flankenlinie fHß von 7-8, wobei der daraus resultierende negative Einfluss auf das Geräusch durch den dämpfenden Radkörper kompensiert wird.

Es hat sich in Versuchen herausgestellt, dass es bei einem Ersatz von Zahnrädern aus Vollstahl durch Zahnräder aus gesintertem Pulvermaterial zu einer Verschiebung der Eigenfrequenz kommt. Dieses kann einhergehen mit lokalen Überhöhungen des Körperschallpegels. Da aber die Eigenfrequenz des Zahnrads durch zum Beispiel die Dichte und damit die veränderte Biegefestigkeit beeinflussbar ist, kann diesen Überhöhungen wirksam entgegengewirkt werden.

Wird eine Selektivanalyse erster bis fünfter Ordnung des Körperschallpegels über die Drehzahl aufgenommen, hat sich herausgestellt, dass sich unter Zuhilfenahme von gesinterten pulvermetallischen Werkstoffen eine Absenkung des Pegels erzielen lässt. Dieses kann durch eine gesteuerte Lage von Porositäten und damit unterschiedlichen Dichten im Zahnrad verstärkt werden. Durch Hinzunahme von ein oder mehreren vorgeschlagenen, weiteren Schallminderungsmitteln gelingt es, eine Absenkung um drei dBA und mehr gegenüber einem gleichen Zahnrad aus Vollstahl zu erzielen. Es bietet sich daher an, als Vergleich zum PM-Zahnrad mit zusätzlichen Schallinderungsmittel das gleiche Zahnrad aus Vollstahl zu nehmen.

Des Weiteren wird auf die Verzahnung des Zahnrads dahingehend eingegangen, dass berücksichtigt wird, dass eine während des Eingriffs in die Verzahnung des korrespondierenden Zahnrads veränderliche Zahnfedersteifigkeit auftritt. Durch diese Steifigkeitsänderungen der Verzahnung sowie auch Verzahnungsabweichungen kann es zu unterschiedlichen Schwingungen des Radkörpers des Zahnrads aber auch des Zahnradgetriebes kommen. Es wird daher vorzugsweise nicht nur ein statisches Verhalten sondern bevorzugt ein dynamisches Verhalten des Zahnrads allein oder auch im Zusammenspiel mit ein oder mehreren anderen Zahnrädern untersucht, mit denen das Zahnrad sich im Eingriff befindet. Hierbei kann vorgesehen werden, dass dynamische Zusatzkräfte zwischen den Zahnrädern statische Umfangskräfte überlagern. Bei einer Tragfähigkeitsberechnung des Zahnrads wird dies durch den Dynamikfaktor berücksichtigt, der dem Verhältnis der auf einen Zahn wirkenden maximalen Kraft zur Zahnkraft einer fehlerfreien Verzahnung unter statischen Bedingungen entspricht. Der Dynamikfaktor ist daher ein Maß für das Schwingungsverhalten des Zahnrads, aber auch der Verzahnung. Das Schwingungsverhalten wird vor allem von der Lage der Erregerfrequenz infolge des wechselnden Zahneingriffs zur Eigenfrequenz des Drehschwingungssystems des Zahnrads bestimmt. Da es um die Eigenfrequenz einen besonders kritischen Resonanzbereich und unterhalb der Eigenfrequenz einen unterkritischen Bereich mit Vorresonanzen sowie oberhalb der Resonanzfrequenz über einem Zwischenbereich eine überkritischen Bereich mit überkritischen Resonanzen in Form von Oberschwingungen geben kann, kann dem bei der Auslegung des Zahnrads, der Anordnung der unterschiedlichen Dichten, Porösitäten und Auswahl der Dämpfungsmittel ebenfalls Rechnung getragen werden. Auch hierbei kann die Eigenfrequenz nach oben durch Erhöhung der Zahnfedersteifigkeit bzw. nach unten durch Absenkung der Zahnfedersteifigkeit ermöglicht werden. Bei der Auslegung kann im Übrigen ein Berechnungstool eingesetzt werden, wie zum Beispiel das unter dem Namen ZaKo3D bekannte Programm des WZL der RWTH Aachen, Deutschland. Hierbei wird aber zum Beispiel eine Dichtevariation mitaufgenommen.

Neben einer Auslegung des Zahnrads unter Berücksichtigung des Dynamikfaktors, und gegebenenfalls dessen Reduzierung hierbei, kann darüber hinaus in einer weiteren Ausgestaltung des Verfahrens vorgesehen werden, dass zusätzlich ein Einfluss von Profilkorrekturen am Zahnkopf oder am Zahnfuß mitberücksichtigt werden kann. Hierzu können zum Beispiel die Kopfflanken teilweise hinter die Evolvente zurückgenommen werden, um Auswirkungen von Herstellabweichungen und belastungsbedingten Verformungen auf das Schwingungs- und Geräuschverhalten des Zahnrads teilweise zu kompensieren. Durch ein abgestimmtes, die Körperschalldämmung berücksichtigendes Auslegen bei gleichzeitiger oder nachfolgender Berücksichtigung konstruktiver Möglichkeiten der Schwingungsbeeinflussung, kann insgesamt ein verbessertes, pegelgedämpfteres Zahnrad ermittelt werden. Bevorzugt geht eine aktive Beeinflussung des Geräuschverhaltens durch Profilkorrekturen oder sonstige konstruktive Änderungen mit in die Berechnung und Auslegung ein, zum Beispiel zusammen mit einer dichtebasierenden Steifigkeitsberechnung von Radkörper und Verzahnung. Darüber hinaus kann ein geräuschbestimmendes Anregungsverhalten der Verzahnung auch unter Last in die Auslegung einfließen.

Im Übrigen wird bevorzugt bei der Analyse auch eine Modellierung der Wahrnehmung des Geräuschs mit eingebunden. Hierzu kann beispielsweise eine Vorgehensweise in das Verfahren eingebunden werden, wie sie aus der Dissertation von Christian Felix Carl mit dem Titel "Gehörbezogene Analyse und Synthese der vibroakustischen Geräuschanregung von Verzahnungen", ISBN: 978-3-86359-277-6 hervorgeht. Hierbei wird die Wahrnehmung von Getriebegeräuschen mit Hilfe psychoakustischer Metriken auf die Radsatzauslegung zurückgeführt und diese durch mathematische Modelle zugänglich gemacht. Das vorgestellte theoretische Modell ist ein Ansatz, einen Zusammenhang zwischen der radsatzspezifischen Anregung und der infolge vibroakustischer Wechselwirkungen entstehenden Geräuschemission sowie deren psychoakustischen Bewertung mit Hilfe eines Berechnungsprozesses abzubilden.

Neben der Auslegung des Zahnrads wird des Weiteren ein Verfahren zur Herstellung eines obigen Zahnrads vorgeschlagen, wobei eine Auswahl eines Fertigungsverfahrens unter fertigungstechnischen, belastungstechnischen und geräuschtechnischen, vorgebbaren Aspekten erfolgt.

Eine Ausgestaltung sieht vor, dass bei einem Verfahren zur Herstellung eines gesinterten Zahnrads wie oben beschrieben zumindest eines der folgenden Herstellungsverfahren zum Ausbilden eines Schallminderungsmittels im Zahnrad zur Anwendung gelangt:
- eine Oberflächenwalzung der Verzahnung aus Sintermetall zur Einstellung einer Porosität unter schallmindernden Gesichtspunkten,
- eine gleichzeitige Anordnung von zwei oder mehr verschiedenen, gemeinsam zu sinternden Pulvern in einer Pressform, zur Ausbildung eines Schallminderungsmittels im Zahnrad wie oben beschrieben,
- ein Einlegen von ein oder mehreren Körpern in und/oder an einem zu sinterndem Material des herzustellenden Zahnrads, vorzugsweise von einer Strebe, einem Schwingungssystem, einem Hohlkörper oder einem flüssigkeitsgefülltem Körper,
- ein additives Herstellungsverfahren, zum Beispiel mittels eines Laserbeds oder mittels eines binderadditiven Herstellungsverfahrens,
- ein Pulver-Sinter-Verfahren und/oder
- einem Hybridverfahren aus verschiedenen Herstellungsverfahren, zum Beispiel einem additiven Herstellungsverfahren in Verbindung mit einem pulvermetallischen Sinterverfahren.

Die vorgeschlagenen Zahnräder können des Weiteren auch mit anderen Zahnrad-Konstruktionen verknüpft werden, deren Ziel es ist, ein Rasseln bzw. Getrieberasseln zum Beispiel in einem Getriebe zu verringern. Beispielsweise kann das derartige Zahnrad mit einem Schallminderungsmittel ein Zero-Backlash-Zahnrad sein. Beispielwiese geht ein derartiges Zahnrad aus der DE 10 2012 025 210 hervor.

Aus den nachfolgenden Figuren gehen verschiedene Ausführungsbeispiele von modifizierten Radkörpern hervor, mit denen eine Geräuschminderung möglich ist. Die in den einzelnen Figuren dargestellten Einzelheiten sind jedoch nicht auf die jeweilige Ausgestaltung beschränkt. Vielmehr können ein oder mehrere Merkmale aus ein oder mehreren Figuren wie auch aus der zugehörigen und/oder obigen Beschreibung zu weiteren Ausgestaltungen verknüpft werden, um eine erfindungsgemäße Lösung zu verwirklichen. Es zeigen:
- Fig. 1 und 2:: Zahnräder, ähnlich einem Verbundzahnrad, bestehend aus mehreren, pulvermetallurgisch hergestellten Einzelbauteilen mit unterschiedlichen Dichten,
- Fig. 3:: Einzelbauteile mit unterschiedlichen Dichten in axialer Richtung, die in der Form variiert werden können,
- Fig. 4 bis 6:: Lokale, nicht symmetrisch angeordnete Dichtevariationen sowohl in radialer als auch axialer Richtung,
- Fig. 7:: Eine scheibenförmige Anordnung von Elementen unterschiedlicher Dichte in Vorzugsrichtung,
- Fig. 8:: Eine scheibenweise Anordnung unterschiedlicher Dichten in einem Winkel zu einer Zahnradachse,
- Fig. 9:: Schematisch Schallführungskanäle in unterschiedlicher Ausführung,
- Fig. 10:: Eine Topologie-optimierte Stabstruktur mit dämpfend beschichteten Stäben,
- Fig. 11:: Einen möglichen Aufbau einer "Feder-Masse-Zelle", und
- Fig. 12:: Ein erfindungsgemäßes Zahnrad.

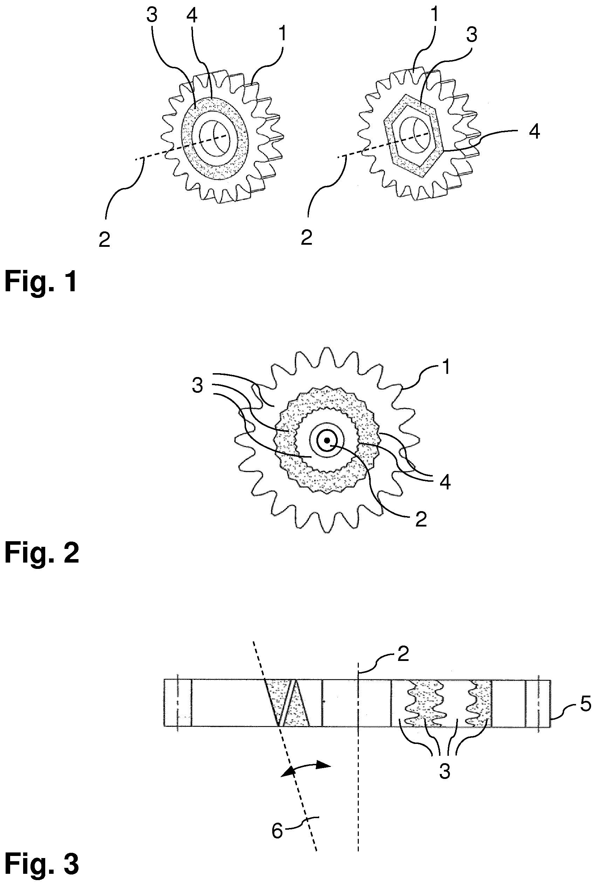

Fig. 1 und Fig. 2 zeigen verschiedene Ausführungen von Zahnrädern 1 um die Drehachse 2 herum angeordnete geschlossene Dichteverläufe 3. Die jeweilige Geometrie der Bereiche unterschiedlicher Dichte kann einen fließenden Übergang 4 oder auch einen sprungartigen Dichteunterschied aufweisen. Sie können ineinander übergehen, wellen- oder auch zackenförmige Gestaltungen aufweisen.

Fig. 3 zeigt, dass die Einzelbauteile 5 mit unterschiedlichen Dichten 3 in axialer Richtung in der Form variiert werden können. Entlang einer axialen Erstreckung können diese Dichteunterschiede parallel zu der Drehachse 2 wie auch in einem Winkel 6 dazu verlaufen.

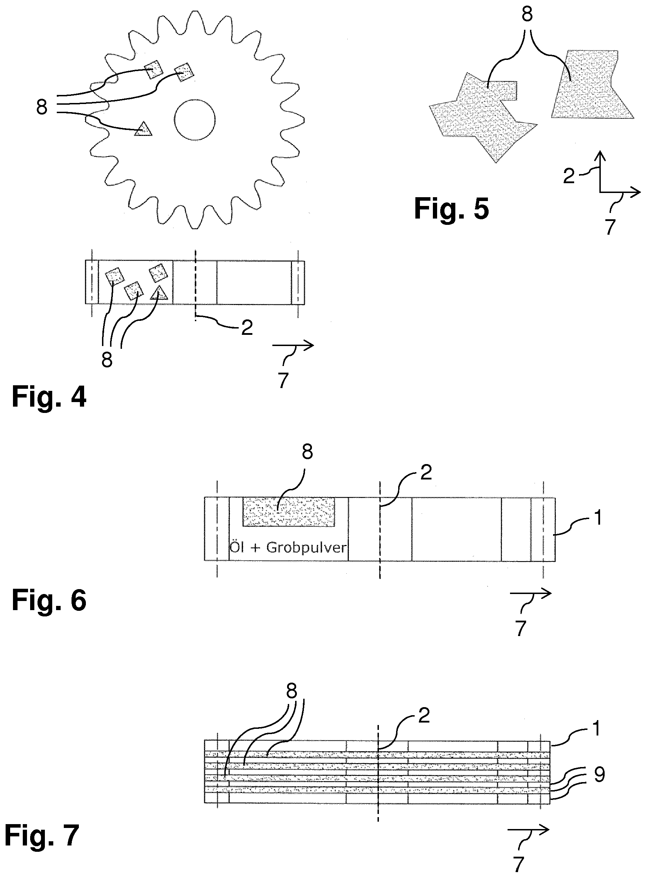

Fig. 4 bis 6 zeigen lokale, bevorzugt nicht symmetrisch angeordnete Dichtevariationen 8 sowohl in radialer 7 als auch axialer Richtung 2. Darüber kann zum einen die Steifigkeit und damit die Eigenfrequenz des Zahnrads 1 beeinflusst werden. Zum anderen kann ein Körperschall durch diese Form absorbiert, abgelenkt oder auch umgeleitet werden.

Fig. 7 zeigt einen scheibenförmigen Aufbau 9 des Zahnrads 1, wobei jede Schicht eine andere Dichte aufweist als eine dazu benachbarte Schicht 9. Dieses ermöglicht zum Beispiel eine Dämpfung des Körperschalls in axialer Richtung 2, wobei eine Festigkeit des Zahnrads 1 weiterhin so auslegbar ist, dass auch hohe Drehmomente übertragbar bleiben.

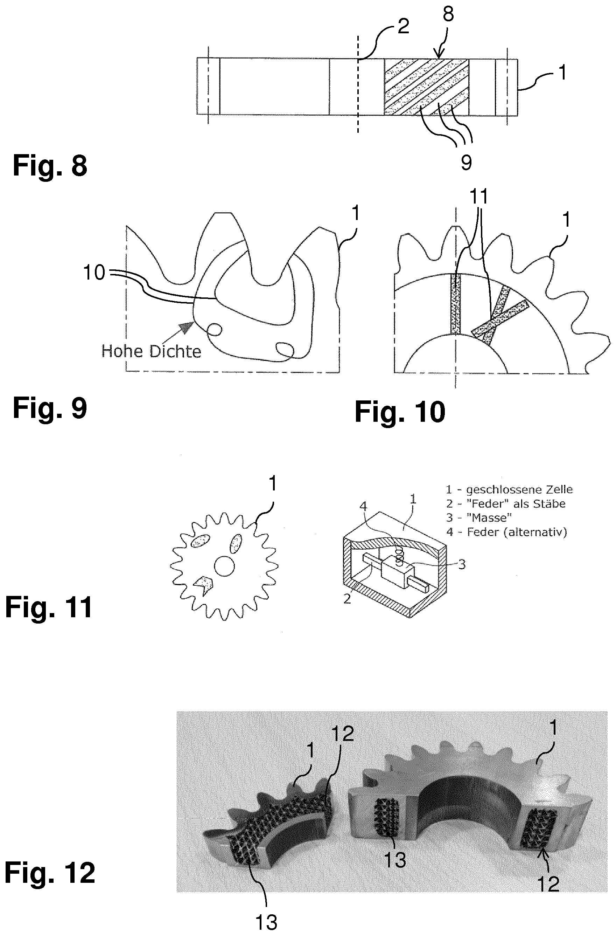

Fig. 8 zeigt eine winklige Anordnung von Scheiben 9 unterschiedlicher Dichte. Das Zahnrad 1 kann insbesondere auch Bereiche aufweisen, die nur Dichtescheiben aufweisen, die parallel und senkrecht zu der Drehachse 2 verlaufen, wie auch Bereiche, die quer zur Drehachse stehen.

Fig. 9 zeigt in beispielhafter Ansicht mehrere Kanäle 10, die zur Schallleitung in dem Zahnrad 1 angeordnet sind. Der Verlauf der schallweiterführenden Kanäle 10 kann davon abhängig gemacht werden, wie denn die Anregung durch zum Beispiel ein Getriebe erfolgt. Die Kanäle 10 können vollständig gefüllt sein. Es besteht aber ebenfalls die Möglichkeit, dass die Kanäle nur unvollständig mit einem anderen Material gefüllt sind.

Fig. 10 zeigt eine Ausgestaltung, bei der das Zahnrad 1 mehrere Streben 11 aufweist. Die Streben 11 dienen zur Stabilisierung und Versteifung des Zahnrads 1 bei gleichzeitiger Beeinflussung der Biegesteifigkeit. Die Streben 11 können vollständig oder teilweise von gesintertem Material umgeben sein. Auch können ein oder mehrere Abschnitte einer Strebe zumindest zum Teil frei von gesintertem Material sein. Des Weiteren besteht die Möglichkeit, dass eine Verstrebung eine Ummantelung, insbesondere eine Beschichtung aufweist. Die Beschichtung dämpft bevorzugt zusätzlich einen Körperschall. Die Beschichtung ist hierzu vorzugsweise offenporig, kann aber auch geschlossenporig sein.

Fig. 11 zeigt in beispielhafter, nur schematisch angedeuteter Weise, ein Schwingungssystem, das im Zahnrad 1 angeordnet sein kann. Vorzugsweise wird hierzu eine Flüssigkeitsbefüllung vorgenommen. Das Schwingungssystem wird vorzugsweise in Kenntnis vom späteren Hauptdrehbereich des Zahnrads ausgelegt. Es kann einerseits dadurch in diesem Bereich aktiv sein. Es kann gemäß einer Weiterbildung aber auch in Anlehnung an eine Eigenfrequenz des Zahnrads ausgelegt sein, um zum Beispiel einer Eigenfrequenz entgegenzuwirken.

Fig. 12 zeigt in beispielhafter Ausgestaltung ein Zahnrad mit inneren vorgebbaren Hohlräumen 12, die zum Beispiel gefüllt werden können oder frei bleiben. Beispielweise kann ein derartiges Zahnrad 1 mittels additivem Pulverbettverfahren hergestellt werden. Bevorzugt wird ein metallisches Pulver in die Hohlräume 12 eingefüllt, das miteinander locker verbackt und dadurch als Adsorber für Schall dient. Vorzugsweise wird ein Hohlraum mit einer Schüttdichte von 2,5 bis 3,5 g/cm³ gefüllt, und zwar nur zum Teil, bevorzugt so, dass mindestens 50 % des Hohlraums luftgefüllt sind. Das geschüttete Material kann das gleiche Material wie das Zahnrad 1 aufweisen oder ein anderes Material sein. Auch ist bei Wabenanordnungen 13 vorzugsweise zu beachten, dass diese geringe Abweichungen voneinander haben. Bevorzugt werden bei Zahnrädern, diesem wie auch anderen, die Sinterhälse genutzt, zum Beispiel durch Zugabe von Öl oder einer anderen Flüssigkeit. Auch kann dem gesinterten Zahnrad Kupfer beigegeben worden sein. Vorzugsweise ist im Inneren mehr Kupfer als im Äußeren beigegeben.

Die Erfindung ist anwendbar bei verschiedenen Zahnrädern, insbesondere Stirnradzahnrädern, schräg- wie auch geradverzahnt, aber auch bei Kegelradzähnen. Verschiedene Zahnräder, derart ausgelegt, können in unterschiedlichsten Anwendungen zum Einsatz gelangen, so zum Beispiel in Motoren jeglicher Art, bei Schaltgetrieben, bei E-Antrieben, in Haushaltsgeräten, handbetätigten Maschinen, in handgeführten Maschinen, in Fahrzeugen aller Art.

## Patentansprüche

1. Verfahren zur Herstellung eines Zahnrads (1), wobei das Zahnrad (1) zumindest ein gesintertes Material mit einer Porosität aufweist, wobei das Zahnrad neben der Porosität ein weiteres Schallminderungsmittel aufweist, wobei das Verfahren die folgenden Schritte aufweist:
- Auslegung eines gesinterten Zahnrads (1) anhand vorgebbarer Geometrie- und Lastdaten,
- Simulation einer Lastberechnung und einer Geräuschvorhersage des ausgelegten Zahnrads (1),
- Auswahl von zumindest einem Schallminderungsmittel für das Zahnrad,
- Überprüfung einer Lastberechnung und einer Geräuschvorhersage,
- gegebenenfalls Anpassung des Zahnrads (1) und Wiederholung von zumindest einer Überprüfung der Geräuschvorhersage bzw. der Lastberechnung,
- Erstellen von Fertigungsdaten und Fertigung des Zahnrads (1) auf Basis der Fertigungsdaten.

2. Verfahren nach Anspruch 1, **dadurch gekennzeichnet, dass** mehrere verschiedene Schallminderungsmittel simuliert werden, bis eine Auswahl von ein oder mehreren Schallminderungsmitteln anhand vorgebbarer Kriterien erfolgt.

3. Verfahren nach Anspruch 1 oder 2, **dadurch gekennzeichnet, dass** eine Qualitätsgüte des ausgelegten Zahnrads (1) gemäß DIN 3961 und DIN 3962 bezüglich eines Parameters, vorzugsweise eines totalen Profilfehlers Fₐ, eines Profilwinkelfehlers f_{Ha} und eines Profilformfehlers fₐ, jeweils die Verzahnungsqualität 6 oder besser angepasst wird.

4. Verfahren nach einem der Ansprüche 1 bis 3, wobei eine Auswahl eines Fertigungsverfahrens unter fertigungstechnischen, belastungstechnischen und geräuschtechnischen, vorgebbaren Aspekten erfolgt.

5. Verfahren nach einem der vorhergehenden Ansprüche 1 bis 4, **dadurch gekennzeichnet, dass** zumindest eines der folgenden Herstellungsverfahren zum Ausbilden eines Schallminderungsmittels im Zahnrad (1) zur Anwendung gelangt:
- eine Oberflächenwalzung und/oder Oberflächenverdichtung der Verzahnung zur Einstellung einer Porosität unter schallmindernden Gesichtspunkten,
- eine gleichzeitige Anordnung von zwei oder mehr verschiedenen, gemeinsam zu sinternden Pulvern in einer Pressform, zur Ausbildung eines Schallminderungsmittels im Zahnrad (1),
- ein Einlegen von ein oder mehreren Körpern in und/oder an einem zu sinterndem Material des herzustellenden Zahnrads (1), vorzugsweise von einer Strebe, einem Schwingungssystem, einem Hohlkörper oder einem flüssigkeitsgefülltem Körper.

6. Verfahren nach einem der vorhergehenden Ansprüche, **dadurch gekennzeichnet, dass** eine zumindest teilweise schalltechnische Entkopplung von einem Zahnkranz des Zahnrads (1) und einer Nabe, einhergehend mit einer Brechung der Schallwellen durch eine Variation der Dichte im Radkörper erzeugt ist, die einen Übertragungspfad der Körperschallwellen von der Erzeugung am Zahnkranz zur Nabe unterbricht und/oder Schallwellen so bricht, absorbiert oder reflektiert, dass ein Körperschallsignal an einem Ausgang in Form einer Welle des Zahnrads (1) oder einer Bohrung des Zahnrads geringer ausfällt.

7. Verfahren nach einem der vorhergehenden Ansprüche, **dadurch gekennzeichnet, dass** eine radiale Variation einer Dichte in einem Radkörper des Zahnrads vorliegt.

8. Verfahren nach einem der vorhergehenden Ansprüche, **dadurch gekennzeichnet, dass** durch Kammern, die in einem Radkörper des Zahnrads (1) eingebracht sind, ein Körperschall gebrochen, absorbiert und/oder reflektiert wird.

9. Verfahren nach Anspruch 8, **dadurch gekennzeichnet, dass** die Kammern leer oder mit einem Medium gefüllt sind, vorzugsweise mit einem Öl und/oder einem losen Pulver.

10. Verfahren nach einem der vorhergehenden Ansprüche, **dadurch gekennzeichnet, dass** das Zahnrad (1) zumindest ein oder mehrere der folgenden Schallminderungsmittel aufweist:
- eine Brechung, eine Absorbtion und/oder Reflexion von Schallwellen durch gefüllte und/oder nicht gefüllte Kammern in dem Zahnrad (1),
- eine Kombination von unterschiedlichen Dichten und/oder Materialien, sich erstreckend in radialer Richtung (7) unter Ausbildung von ringförmigen, vorzugsweise geschlossenen Ringen unterschiedlicher Dichte und/oder Materialien.

11. Verfahren nach einem der vorhergehenden Ansprüche, **dadurch gekennzeichnet, dass** eine axiale Dichtevariation (8) vorgesehen ist.

12. Verfahren nach Anspruch 11, **dadurch gekennzeichnet, dass** das Zahnrad (1) einen scheibenförmigen Aufbau (9) unterschiedlicher Dichten hat.

13. Verfahren nach einem der vorhergehenden Ansprüche, **dadurch gekennzeichnet, dass** ein Schallkanal im Zahnrad (1) verläuft, entlang der ein Körperschall geführt wird.

14. Verfahren nach Anspruch 13, **dadurch gekennzeichnet, dass** gezielt eingebrachte Leitungen als Schallkanäle einen Körperschall daran hindern, direkt zu einem Ausgang in Form einer Welle oder Bohrung des Zahnrads (1) zu gelangen.

15. Verfahren nach einem der vorhergehenden Ansprüche 13 und 14, **dadurch gekennzeichnet, dass** ein Material mit einer höheren Dichte einen Schallkanal bildet.

16. Verfahren nach einem der vorhergehenden Ansprüche 13, 14 und 15, **dadurch gekennzeichnet, dass** ein Schallkanal mit einem, zur Umgebung des Schallkanals gleichen Material mit geringerer Porosität versehen ist.

17. Verfahren nach einem der vorhergehenden Ansprüche 13 bis 16, **dadurch gekennzeichnet, dass** ein Schallkanal rotationssymmetrisch um eine Drehachse (2) des Zahnrads (1) angeordnet ist.

18. Verfahren nach einem der vorhergehenden Ansprüche, **dadurch gekennzeichnet, dass** das Zahnrad (1) eine schwingungsdämpfende Beschichtung aufweist.

19. Verfahren nach einem der vorhergehenden Ansprüche, **dadurch gekennzeichnet, dass** das Zahnrad (1) eine Verstrebung aufweist, wobei Streben (11) der Verstrebung bevorzugt schwingungsdämpfend beschichtet sind.

20. Verfahren nach einem der vorhergehenden Ansprüche, **dadurch gekennzeichnet, dass** ein oder mehrere asymmetrische Geometrien im Zahnrad (1) vorliegen, die eine Eigenfrequenz des Zahnrads (1) beeinflussen.

21. Verfahren nach einem der vorhergehenden Ansprüche, **dadurch gekennzeichnet, dass** das Zahnrad (1) eine Qualitätsgüte des ausgelegten Zahnrads (1) gemäß DIN 3961 und DIN 3962 bezüglich zumindest eines Parameters, vorzugsweise eines totalen Profilfehlers Fₐ, eines Profilwinkelfehlers f_{Ha} und/oder eines Profilformfehlers fₐ, von zumindest der Verzahnungsqualität 6 oder besser aufweist.

## Claims

1. Method for production of a gear wheel (1), wherein the gear wheel (1) has at least one sintered material with a porosity, wherein the gear wheel has, in addition to the porosity, another noise reducing means, wherein the method has the following steps:
- design of a sintered gear wheel (1) using predetermined geometry and loading data,
- simulation of a load computation and a noise prediction for the designed gear wheel (1),
- selection of at least one noise reducing means for the gear wheel,
- verification of a load computation and a noise prediction,
- adapting of the gear wheel (1) if necessary and repeating of at least a verification of the noise prediction or the load computation,
- drafting of manufacturing data and manufacturing of the gear wheel (1) on the basis of the manufacturing data.

2. Method according to claim 1, **characterized in that** several different noise reducing means are simulated until a choice of one or more noise reducing means is made with the aid of predetermined criteria.

3. Method according to claim 1 or 2, **characterized in that** a quality grade of the designed gear wheel (1) per DIN 3961 and DIN 3962 in terms of one parameter, preferably a total profile error Fₐ, a profile angle error f_{Ha} and a profile form error fₐ, is adapted each time to the gearing quality 6 or better.

4. Method according to one of claims 1 to 3, wherein a selection of a manufacturing method is made from predetermined manufacturing technology, load analysis, and noise abatement aspects.

5. Method according to one of claims 1 to 4, **characterized in that** at least one of the following manufacturing methods is used to form a noise reducing means in the gear wheel (1):
- a surface rolling and/or surface compacting of the teeth to adjust a porosity from noise reduction aspects,
- a simultaneous arrangement of two or more different powders to be sintered jointly in the same pressing mold for the forming of a noise reducing means in the gear wheel (1),
- inserting of one or more bodies in and/or on a material to be sintered of the gear wheel (1) to be produced, preferably a brace, a vibration system, a hollow body or a fluid-filled body.

6. Method according to one of the preceding claims, **characterized in that** an at least partially acoustic decoupling of a tooth ring of the gear wheel (1) and a hub is produced, along with a refraction of sound waves by a variation of density in the wheel body, which interrupts a transmission path of the structure-borne sound waves from the generation at the tooth ring to the hub and/or refracts, absorbs or reflects sound waves so that a structure-borne sound signal at an output in the form of a shaft of the gear wheel (1) or a bore of the gear wheel seems less pronounced.

7. Method according to one of the preceding claims, **characterized in that** there is a radial variation of a density in a wheel body of the gear wheel.

8. Method according to one of the preceding claims, **characterized in that** a structure-borne sound is refracted, absorbed and/or reflected by chambers which are introduced in a wheel body of the gear wheel (1).

9. Method according to claim 8, **characterized in that** the chambers are empty and/or filled with a medium, preferably with an oil and/or a loose powder.

10. Method according to one of the preceding claims, **characterized in that** the gear wheel (1) has at least one or more of the following noise reducing means:
- a refraction, an absorption and/or reflection of sound waves by filled and/or unfilled chambers in the gear wheel (1),
- a combination of different densities and/or materials which extend in the radial direction (7) to form ring-shaped, preferably closed rings of different density and/or materials.

11. Method according to one of the preceding claims, **characterized in that** an axial density variation (8) is provided.

12. Method according to claim 11, **characterized in that** the gear wheel (1) has a disk-like construction (9) of different densities.

13. Method according to one of the preceding claims, **characterized in that** a sound channel runs in the gear wheel (1) along which a structure-borne sound is guided.

14. Method according to claim 13, **characterized in that** specifically introduced conduits as noise channels hinder a structure-borne sound from getting directly to an output in the form of a shaft or bore of the gear wheel (1).

15. Method according to one of the preceding claims 13 and 14, **characterized in that** a material with a higher density forms a sound channel.

16. Method according to one of the preceding claims 13, 14 and 15, **characterized in that** a sound channel is provided with a material identical to the surroundings of the sound channel with a lesser porosity.

17. Method according to one of the preceding claims 13 to 16, **characterized in that** a sound channel has rotational symmetry about an axis of rotation (2) of the gear wheel (1).

18. Method according to one of the preceding claims, **characterized in that** the gear wheel (1) has a vibration-dampening coating.

19. Method according to one of the preceding claims, **characterized in that** the gear wheel (1) has a bracing, while the braces (11) of the bracing preferably have a vibration-dampening coating.

20. Method according to one of the preceding claims, **characterized in that** one or more asymmetrical geometries are present in the gear wheel (1) which influence an eigenfrequency of the gear wheel (1).

21. Method according to one of the preceding claims, **characterized in that** the gear wheel (1) has a quality grade of the designed gear wheel (1) per DIN 3961 and DIN 3962 in terms of at least one parameter, preferably a total profile error Fₐ, a profile angle error f_{Ha} and/or a profile form error fₐ, of at least the gearing quality 6 or better.

## Revendications

1. Procédé de fabrication d'une roue dentée (1), dans lequel la roue dentée (1) comprend au moins un matériau fritté présentant une porosité, dans lequel la roue dentée présente, en plus de la porosité, un autre moyen de réduction du bruit, le procédé comprenant les étapes suivantes:
- conception d'une roue dentée frittée (1) à l'aide de données de géométrie et de charge pouvant être prédéfinies,
- simulation d'un calcul de charge et d'une prédiction de bruit de la roue dentée conçue (1),
- sélection d'au moins un moyen de réduction de bruit pour la roue dentée,
- vérification d'un calcul de charge et d'une prédiction de bruit,
- éventuellement adaptation de la roue dentée (1) et répétition d'au moins une vérification de la prédiction de bruit ou du calcul de charge,
- production de données de fabrication et fabrication de la roue dentée (1) sur la base des données de fabrication.

2. Procédé selon la revendication 1, **caractérisé en ce que** plusieurs moyens de réduction du bruit différents sont simulés jusqu'à ce qu'une sélection d'un ou plusieurs moyens de réduction du bruit à l'aide de critères pouvant être prédéfinis soit effectuée.

3. Procédé selon la revendication 1 ou 2, **caractérisé en ce qu'**une classe de qualité de la roue dentée conçue (1) conformément à DIN 3961 et DIN 3962 par rapport à un paramètre, de préférence une erreur de profil totale Fₐ, une erreur d'angle de profil f_{Ha} et une erreur de forme de profil fₐ, est adaptée respectivement à une qualité de denture de classe 6 ou mieux.

4. Procédé selon l'une des revendications 1 à 3, dans lequel une sélection d'un procédé de fabrication s'effectue suivant des aspects techniques pouvant être prédéfinis de fabrication, de charge et de bruit.

5. Procédé selon l'une des revendications 1 à 4, **caractérisé en ce qu'**au moins l'un des procédés de fabrication suivants est utilisé pour la formation d'un moyen de réduction du bruit dans la roue dentée (1):
- un laminage de surface et/ou une compression de surface de la denture pour régler une porosité du point de vue de la réduction du bruit,
- un agencement simultané de deux ou plus de deux poudres différentes à fritter conjointement dans un moule de compression, pour la formation d'un moyen de réduction du bruit dans la roue dentée (1),
- une insertion d'un ou plusieurs corps dans et/ou sur un matériau à fritter de la roue dentée (1) à fabriquer, de préférence d'un renfort, d'un système oscillant, d'un corps creux ou d'un corps rempli de liquide.

6. Procédé selon l'une des revendications précédentes, **caractérisé en ce qu'**un découplage au moins partiellement acoustique d'un anneau denté de la roue dentée (1) et d'un moyeu est produit conjointement avec une réfraction des ondes acoustiques par une variation de la densité dans le corps de roue, qui interrompt un trajet de transmission des ondes de bruit solidien de la génération au niveau de l'anneau denté vers le moyeu et/ou réfracte, absorbe ou réfléchit les ondes acoustiques de telle sorte qu'un signal de bruit solidien au niveau d'une sortie sous la forme d'un arbre de la roue dentée (1) ou d'un alésage de la roue dentée soit plus faible.

7. Procédé selon l'une des revendications précédentes, **caractérisé en ce qu'**une variation radiale d'une densité dans un corps de la roue dentée est présente.

8. Procédé selon l'une des revendications précédentes, **caractérisé en ce qu'**un bruit solidien est réfracté, absorbé et/ou réfléchi par des chambres qui sont ménagées dans un corps de la roue dentée (1).

9. Procédé selon la revendication 8, **caractérisé en ce que** les chambres sont vides ou remplies d'un milieu, de préférence d'une huile et/ou d'une poudre en vrac.

10. Procédé selon l'une des revendications précédentes, **caractérisé en ce que** la roue dentée (1) comprend au moins l'un ou plusieurs des moyens de réduction de bruit suivants:
- une réfraction, une absorption et/ou une réflexion d'ondes acoustiques par des chambres remplies et/ou non remplies dans la roue dentée (1),
- une combinaison de densités et/ou de matériaux différents, s'étendant dans la direction radiale (7) en formant des anneaux annulaires de préférence fermés de densités et/ou de matériaux différents.

11. Procédé selon l'une des revendications précédentes, **caractérisé en ce qu'**une variation axiale de densité (8) est prévue.

12. Procédé selon la revendication 11, **caractérisé en ce que** la roue dentée (1) présente une structure (9) en forme de disque de différentes densités.

13. Procédé selon l'une des revendications précédentes **caractérisé en ce qu'**un canal acoustiques s'étend dans la roue dentée (1), canal le long duquel un bruit solidien est guidé.

14. Procédé selon la revendication 13, **caractérisé en ce que** des conduits introduits de manière ciblée en tant que canaux acoustiques empêchent un bruit solidien de parvenir directement jusqu'à une sortie sous la forme d'un arbre ou d'un alésage de la roue dentée (1).

15. Procédé selon l'une des revendications précédentes 13 et 14, **caractérisé en ce qu'**un matériau de densité supérieure forme un canal acoustique.

16. Procédé selon l'une des revendications précédentes 13, 14 et 15, **caractérisé en ce qu'**un canal acoustique comprenant un matériau identique à l'environnement du canal acoustique est doté d'une porosité inférieure.

17. Procédé selon l'une des revendications précédentes 13 à 16, **caractérisé en ce qu'**un canal acoustique est disposé de manière à présenter une symétrie de révolution autour d'un axe de rotation (2) de la roue dentée (1).

18. Procédé selon l'une des revendications précédentes, **caractérisé en ce que** la roue dentée (1) comprend un revêtement amortissant les vibrations.

19. Procédé selon l'une des revendications précédentes, **caractérisé en ce que** la roue dentée (1) comprend un renforcement, des renforts (11) du renforcement étant de préférence dotés d'un revêtement amortissant les vibrations.

20. Procédé selon l'une des revendications précédentes, **caractérisé en ce qu'**une ou plusieurs géométries asymétriques sont présentes dans la roue dentée (1), lesquelles influencent une fréquence propre de la roue dentée (1).

21. Procédé selon l'une des revendications précédentes, **caractérisé en ce que** la roue dentée (1) présente une classe de qualité de la roue dentée conçue (1) conformément à DIN 3961 et DIN 3962 par rapport à un paramètre, de préférence une erreur de profil totale Fₐ, une erreur d'angle de profil f_{Ha} et une erreur de forme de profil fₐ, d'au moins la qualité de denture de classe 6 ou mieux.
